# EUROPÄISCHE PATENTANMELDUNG

(11) **EP 1 568 831 A1**
(43) Veröffentlichungstag der Anmeldung: **31.08.2005**
(21) Anmeldenummer: 04004338.2
(22) Anmeldetag: 26.02.2004
(51) Int. Cl.: E04H 4/14

(54) **Aus Fasern aufgebauter Körper mit Hohlräumen enthaltend ein Biozid**

(71) Anmelder: Sika Technology AG, 6340 Baar (CH)
(72) Erfinder: Bonnet, Martin, 51147 Köln (DE); Klaar, Karlo, 53839 Troisdorf (DE); Slongo, Mario, 1712 Tafers (CH)
(74) Vertreter: Isler, Jörg

(57) **Zusammenfassung**

Die Erfindung betrifft ein Verfahren für die Vermeidung einer Verfärbung einer Folie (6) in einem Becken (7), insbesondere Schwimmbecken, durch mikrobiellen Befall. Dabei wird das unter der Folie (6) liegende Vlies, ein aus Fasern (F) aufgebauter Körper (4) mit Hohlräumen (H), mit einem Biozid (5) behandelt.

## Beschreibung

### Technisches Gebiet

Die Erfindung betrifft aus Fasern aufgebaute Körper mit Hohlräumen für eine Herstellung von mit Folien ausgekleideten Becken.

### Stand der Technik

Gegenwärtig wird bei der Herstellung eines Beckens, insbesondere eines Schwimmbeckens, folgendes Verfahren durchgeführt. Nach dem Bodenaushub für ein Schwimmbecken erfolgt das Anbringen einer Schalung mit einem Beton oder einem verputzten Mauerwerk. Danach wird die Fläche der zementösen Schalung von losen Partikeln gereinigt und zum Zwecke der Desinfektion mit Chlorbleichlauge behandelt. Die Verarbeitung dieser Chlorbleichlauge ist gesundheitsschädlich. Auf die behandelte zementöse Schalung wird ein Vlies, insbesondere ein Kunststoff-Schutzvlies, eingebracht. Das Vlies hat die Aufgabe Schutz vor mechanischen Beschädigungen durch eventuellen Graten und Erhebungen in der zementösen Schalung gegenüber der Folie, der Auskleidungsfolie, zu gewähren und dient gleichzeitig als Polsterung zur Verbesserung der Trittfreundlichkeit. Anschliessend wird das Vlies mit einer Folie, einer Kunststoffdichtungsbahn, wie zum Beispiel homogenes Weich-PVC oder Weich-PVC mit einer innenliegenden Gewebeverstärkung, überdeckt. Auf dem Markt können auch mit einem Vlies beschichteten Folie bezogen werden.

Trotz biozider Ausrüstung der meisten im Schwimmbadbau eingesetzten Folien, korrekter Inbetriebnahme und Wasserpflege kommt es doch in Einzelfällen immer wieder zu mikrobiellem Befall der Folie, welcher sich in einer irreversiblen Verfärbung derselbigen äussert. Die sichtbare Verfärbung der Folie ist braun bis schwarz und ist als Anblick störend. Die Hauptursache hierfür sind die im Grundwasser enthaltenen Mikroorganismen. Das Grundwasser dringt beispielsweise durch Setzrisse der zementösen Schalung zum Vlies und danach zur Folie. Die biozide Ausrüstung der Folie hält in diesem Fall dem durch das oberflächennahe Grundwasser bedingten biologischen Dauerangriff nur begrenzte Zeit stand, so dass es früher oder später zu einem mikrobiellen Befall der Folie kommt.

### Darstellung der Erfindung

Aufgabe der vorliegenden Erfindung ist es, ein Material zur Verfügung zu stellen, welches eine damit verbundene Folie von einem mikrobiellen Befall schützt.

Erfindungsgemäss wird dies durch die Merkmale des ersten Anspruchs erreicht. Der Vorteil der Erfindung ist, dass sich die Folie aufgrund des Einsatzes eines damit in Kontakt stehenden aus Fasern aufgebauten Körpers, welcher ein Biozid enthält, nicht verfärbt.

Ein weiterer Aspekt der Erfindung ist es, ein Becken bereitzustellen, welches vor mikrobiellen Befall geschützt ist.

Ein weiterer Gegenstand der Erfindung ist ein Verfahren, für eine Herstellung eines mit einer Folie ausgekleideten Beckens bereitzustellen, wobei die Folie gegenüber einem mikrobiellen Befall geschützt wird.

Der Vorteil des erfindungsgemässen Verfahrens ist, dass ein aus Fasern aufgebauter Körper mit Hohlräumen mit einem Biozid behandelt wird und das Biozid die damit verbundene Folie vor einem mikrobiellen Befall schützt.

Weiterhin offenbart die Erfindung, eine Behandlung der zementösen Schalung mit einem Biozid.

Weitere vorteilhafte Ausgestaltungen der Erfindung ergeben sich aus den Unteransprüchen.

### Kurze Beschreibung der Zeichnung

Im folgenden wird anhand der Zeichnungen die Erfindung näher erläutert. Gleiche Elemente sind in den verschiedenen Figuren mit den gleichen Bezugszeichen versehen. Es zeigen:
- Fig. 1:: Ein schematischer Querschnitt eines Aufbaus eines erfindungsgemässen Beckens;
- Fig. 2:: Ein schematischer Querschnitt einer Ausführungsform eines aus Fasern aufgebauten Körpers mit Hohlräumen.

### Ausführung der Erfindung

Die vorliegende Erfindung betrifft ein aus Fasern aufgebauten Körper mit Hohlräumen, wobei die Fasern von einem Biozid zumindest teilweise umgeben sind.

Der Körper ist erfindungsgemäss aus Fasern aufgebaut. Die Fasern sind hierbei aus organischem oder synthetischen Material. Insbesondere handelt es sich um Zellulose-, Baumwollfasern oder um synthetische Fasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Weiterhin umfasst der erfindungsgemässe Körper Hohlräume. Diese Hohlräume werden durch geeignete Herstellverfahren aufgebaut. Hierbei ist bevorzugt, dass die Hohlräumen nicht vollständig abgeschlossen sind, sondern dass sie mit der Umgebung direkt oder über Kanäle in Verbindung stehen. Damit soll eine schwammartige Struktur geschaffen werden, die insbesondere eine hohe Aufnahmekapazität von Flüssigkeiten ermöglicht und zudem eine dämpfende Eigenschaft gegenüber Schlägen und Tritte auf diesen Körper aufweisen.

Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind. Bevorzugt sind Filze oder Vliese. Besonders bevorzugt sind Vliese.

Der Körper kann ein lockereres Material aus Spinnfasern, Filamenten sein, deren Zusammenhalt im allgemeinen durch die den Fasern eigene Haftung gegeben ist. Hierbei können die Einzelfasern eine Vorzugsrichtung aufweisen oder ungerichtet sein. Der aus Fasern aufgebauter Körper kann mechanisch verfestigt werden durch Vernadeln, Vermaschen oder durch Verwirbeln mittels scharfer Wasserstrahlen und besitzt typischerweise ein Flächengewicht von ca. 300 g/m² und kann als Matten oder in Form von Rollen transportiert werden.

Der erfindungsgemässe aus Fasern aufgebaute Körper enthält weiterhin zudem ein Biozid. Das Biozid wird zur Bekämpfung pathogener Mikroorganismen, wie zum Beispiel Bakterien, Viren, Sporen, Klein- und Schimmelpilze, eingesetzt. Es kann ein beliebiges Biozid ausgewählt werden. Vorteilhaft ist ein sogenanntes Breitbandbiozid, welches ein sehr breites Wirkungsspektrum besitzt und als Mikrobiozid bezeichnet wird. Solche Breitbandbiozide sind weit verbreitet und beispielsweise als ACTICIDE® LV 706, kommerziell erhältlich von THOR GmbH, Deutschland, oder als ALGIZID, kommerziell erhältlich von Marmorit GmbH, Deutschland, auf dem Markt.

Als besonders geeignet haben sich Biozide erwiesen, die ein Gemisch eines Benzalkoniumchlorid und 2-n-Octyl-2,3-dihydroisothiazol-3-on sind oder enthalten. Das Biozid kann als solches oder in einer Darreichungsform zum Einsatz gelangen. Insbesondere geeignet ist es in Form einer Lösung oder einer Dispersion vorliegend, insbesondere in Wasser. Wenngleich das Biozid bevorzugt wasserlöslich ist, ist die biozide Wirksamkeit auch nach längerer Wässerung des aus Fasern aufgebauten Körpers noch gegeben. In der Regel zeigt eine wässrige Formulierung mit 10 bis 20 % Gewichts-% Biozid, bezogen auf die Formulierung, eine ausreichende keimtötende Wirkung. Das Biozid kann durch Besprühen, Bespritzen, Behandeln mit einer getränkten Bürste oder durch Eintauchen in das Biozid oder die Biozid enthaltende Darreichungsform mit dem aus Fasern aufgebauten Körper in Kontakt gebracht werden. Durch Kapillarkräfte unterstützt gelangt das Biozid ins Innere des aus Fasern aufgebauten Körpers und kann dort auf die Oberfläche der Fasern aufziehen oder in die Hohlräume eindringen. Die Menge des aufgebrachten Biozides kann sehr unterschiedlich sein, und ist stark abhängig von der Grösse und Menge der Hohlräume sowie der Viskosität und Polarität des Biozides oder dessen Formulierung. Die Aufnahmekapazität des aus Fasern aufgebauten Körpers sollte vorteilhaft nicht voll ausgenützt werden. Dies hat den grossen Vorteil, dass der mit Biozid behandelte aus Fasern aufgebauten Körper nicht bereits bei kleinem Druck, wie er beim Aufbringen und Transportieren des Körpers vorhanden sein kann, Biozid abgibt und damit zu unerwünschten Verschmutzungen führt.

Das Biozid wird mit dem aus Fasern aufgebauten Körper mit Hohlräumen in Kontakt gebracht, so dass die Fasern zumindest teilweise umhüllt sind. Hierbei kann das Biozid auf der Oberfläche der Fasern aufziehen oder aber, in den Hohlräumen vorliegen. Besonders geeignet ist es, wenn die Hohlräume zumindest partiell gefüllt sind. Es ist selbstverständlich auch möglich, dass die Hohlräume vollständig mit Biozid oder der Biozid enthaltenden Darreichungsform aufgefüllt sind. Es ist hierbei jedoch darauf zu achten, dass eine vollständige Befüllung der Hohlräume häufig nicht nötig ist und insbesondere bei Transporten dies zu Problemen führen kann.

Die Fasern können selber ein Biozid enthalten. Dieses Biozid schützt die Fasern vor einem mikrobiellen Befall. Das Biozid wird hierbei beim Herstellen oder Bearbeiten der Fasern verwendet und ist damit in die Fasern eingebunden und somit nicht für den mikrobiellen Schutz einer damit in Kontakt stehenden Folie ausreichend verfügbar.

Der erfindungsgemässe aus Fasern aufgebaute Körper kann insbesondere für den Bau von Becken, insbesondere von Schwimmbecken, eingesetzt werden. Hierbei kann der aus Fasern aufgebaute Körper bereits vorgängig mit dem Biozid kontaktierten Körper zum Einsatz kommen oder die Kontaktierung des aus Fasern aufgebauten Körpers erfolgt erst als Arbeitsschritt beim Bau des Beckens.

Der Aufbau eines Beckens erfolgt typischerweise folgendermassen. Zuerst wird der Untergrund des Beckens vorbereit, indem beispielsweise ein Aushub gemacht wird. Anschliessend erfolgt das Überdecken des Untergrundes mit einer zementösen Schalung. Diese Schalung wird insbesondere von losen Partikeln gereinigt. Üblicherweise erfolgt nun eine Behandlung mit Chlorbleichlauge, beispielsweise in Form einer 12.5 % -igen Lösung von Natriumhypochlorit (NaOCl). Anschliessend wird ein aus Fasern aufgebauter Körper mit Hohlräumen auf die zementöse Schalung aufgelegt und fixiert.

Es wurde nun festgestellt, dass anstelle der Behandlung mit Chlorbleichlauge auch eine Behandlung mittels eines Biozides, bevorzugt mittels des Biozides, wie es den aus Fasern aufgebauten Körper verwendet wird, benutzt werden kann. Damit fällt die Verwendung von Chlorbleichlauge weg, was einen gesundheitsrelevanten Vorteil darstellt.

Unter Umständen kann die Behandlung der zementösen Schalung mit Chlorbleichlauge oder Biozid vor dem Anbringen des aus Fasern aufgebauten Körper verzichtet werden. In diesem Falle ist es jedoch angebracht, bedeutend mehr Biozid für die Behandlung des aus Fasern aufgebauten Körper anzuwenden.

Anschliessend wird auf den aus Fasern aufgebauten Körper eine Folie aufgelegt. Die Folie ist zum Beispiel aus homogenem Weich-PVC oder Weich-PVC, insbesondere mit einer innenliegenden Gewebeverstärkung. Hierbei kann es sich um fertig vorkonfektionierte Folien, wie auch um vor Ort verschweisste Folien handeln. Bei letzteren erfolgt die Verbindung der Folien, beziehungsweise der Dichtungsbahnen, untereinander in der Regel durch Quellschweissen mit Tetrahydrofuran oder durch Warmgasschweissen. Die mechanische Befestigung der Auskleidung im Becken erfolgt mit Formteilen beziehungsweise Winkeln aus Verbundblechen. Bauteile, die die Abdichtung durchdringen, wie Zu- und Abläufe, Skimmer, Scheinwerfer oder dergleichen, werden an die Auskleidung wasserdicht angeschlossen.

Als Folie wird bevorzugt eine Folie eingesetzt, welcher ihrerseits bei der Herstellung ein Biozid für Folien zugefügt wurde. Als solche Biozide für Folien sind insbesondere geeignet Organo-Zinn-Verbindungen, Pyrithione, Oxybisphenoxarsen (OBPA), Octylisothiazolinon (OIT) oder Dichloroctylisothiazolinon (DCOIT).

Eine nachträgliche Behandlung der Folie mit einem Biozid ist jedoch nicht geeignet, da die Oberfläche der Folie eine mangelnde Adsorption und Absorption gegenüber dem Biozid aufweist, so dass das Biozid oder eine Biozid enthaltende Darreichungsform von der Folie abläuft.

In einer Ausführungsform der Erfindung ist der aus Fasern aufgebaute Körper direkt mit einer Folie verbunden. Eine solche Folie kann beispielsweise durch ein Beschichten eines aus Fasern aufgebauten Körpers mit Hohlräumen, insbesondere eines Vlieses, mit einem thermoplastischen Material, insbesondere eines Weich-PVC, bei der Herstellung einer Folie erfolgen. Weiterhin kann eine thermoplastische Folie, insbesondere Weich-PVC, oberflächlich erwärmt und anschliessend ein aus Fasern aufgebauter Körper mit Hohlräumen unter leichtem Druck mit dieser Oberfläche kontaktiert werden, so dass nach Erkalten ein fester Verbund zwischen Folie und aus Fasern aufgebauten Körper entsteht. Bei der Herstellung einer solchen Composite-Folie ist es wichtig, dass die Hohlräume des aus Fasern aufgebauten Körpers nicht vollständig mit Thermoplast gefüllt werden. Es ist erwünscht und bevorzugt, dass der Thermoplast lediglich makroskopisch oberflächlich mit einer Seite des aus Fasern aufgebauten Körpers verbunden ist.

Für die Wirkungsweise der Erfindung ist es wesentlich, dass die Folie mit dem aus Fasern aufgebaute Körper, dessen Fasern zumindest teilweise mit Biozid umhüllt sind, in direktem Kontakt steht. Das Biozid migriert von den Fasern und Hohlräumen des aus Fasern aufgebauten Körpers zur Folie und baut ein Gleichgewicht auf der Folienrückseite, gegenüber dem im Untergrund vorhanden Medium auf. Es wurde gefunden, dass der mikrobielle Befall häufig nicht von der Seite dieses Mediums, sondern von der Rückseite der Folie her startet. Dadurch wird eine Verfärbung der Folie auch auf der dem Medium zugewanden Seite vermieden.

In einer Ausführungsform wird ein aus Fasern aufgebauter Körper mit Hohlräumen mit einem Biozid behandelt und danach auf einer mit Chorbleichlauge behandelte zementöse Schalung mechanisch fixiert.

In einer weiteren Ausführungsform wird ein aus Fasern aufgebauter Körper mit Hohlräumen auf einer nicht mit Chlorbleichlauge behandelten zementösen Schalung verlegt. Die Hohlräume und die Fasern des aus Fasern aufgebauten Körpers werden mit einem Biozid gründlich behandelt, welches auch die zementöse Schalung benetzt und damit eine zusätzliche Barriere gegenüber Mikroorganismen aufbaut.

In einer weiteren Ausführungsform wird insbesondere bei der Sanierung von älteren Becken zunächst die zementöse Schalung mit Biozid gründlich vorbehandelt und anschliessend der aus Fasern aufgebaute Körper mit Hohlräumen auf der Schalung verlegt und ebenfalls gründlich mit Biozid behandelt.

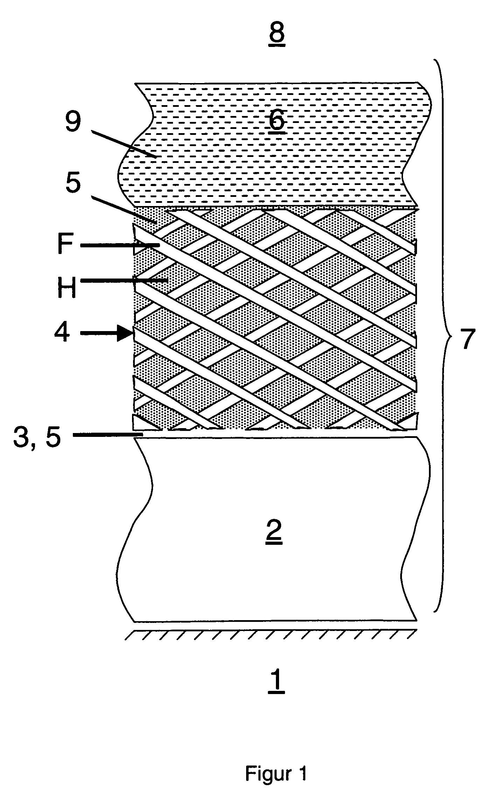

Figur 1 beschreibt ein Becken 7, insbesondere ein Schwimmbecken, welches auf einem Untergrund 1, der mit einer zementösen Schalung 2 überdeckt wird. Die Flächen der zementösen Schalung 2 werden von losen Partikeln, gegebenenfalls mit einem Staubsauger, gereinigt. Eine Chlorbleichlauge 3 wird auf die zementöse Schalung 2 aufgetragen, beispielsweise in Form einer 12.5 % -igen Lösung von Natriumhypochlorit (NaOCl). Anschliessend wird ein aus Fasern F aufgebauter Körper 4 mit Hohlräumen H auf die zementöse Schalung 2 aufgelegt und fixiert.

Die Fasern F des aus Fasern F aufgebauten Körpers 4 mit Hohlräumen H, insbesondere eines Vlieses, sind zumindest teilweise mit einem Biozid 5 umhüllt. Das Biozid 5 kann bereits im aufgebrachten Körper 4 vor dessen Aufbringen enthalten sein oder nach dem Aufbringen des Körpers erfolgen. Diese Behandlung des aus Fasern F aufgebauten Körpers 4 mit dem Biozid 5 bewirkt einen überraschend guten Schutz gegenüber einem mikrobiellen Befall der Folie 6, was zu keiner optisch beeinträchtigenden Verfärbung der Folie 6 führt. Die Folie 6 ist bevorzugt mit einem Biozid für Folien 9 ausgerüstet.

Das Becken 7 besteht somit im Wesentlichen aus drei Schichten, nämlich der zementösen Schalung 2, dem aus Fasern F aufgebauten Körper 4 mit Hohlräumen H mit dem darin enthaltenen Biozid 5 und der Auskleidungsfolie 6. Das Becken 7 enthält nach dem Befüllen üblicherweise ein flüssiges Medium 8. Dieses Medium ist bevorzugt Wasser.

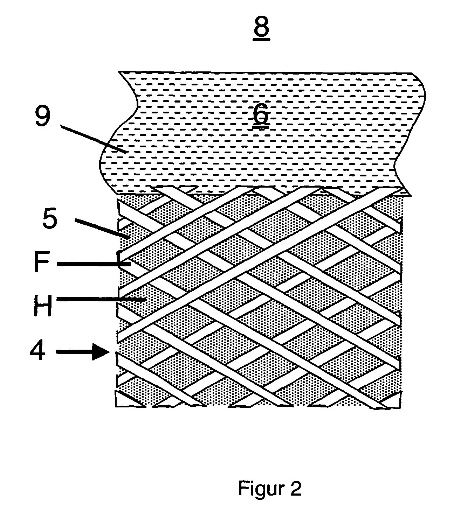

Die Figur 2 zeigt einen aus Fasern F aufgebauten Körper 4 mit Hohlräumen H, insbesondere ein Vlies, welches mit einer Folie 6 beschichtet ist. Dessen Herstellung erfolgt unter anderem dadurch, dass der aus Fasern F aufgebaute Körper 4 auf die thermisch erwärmte Folie 6 oder frisch hergestellte Folie 6 zusammengeführt und gepresst wird. Die Figur 2 gibt schematisch wieder, dass der aus Fasern aufgebaute Körper mit dem Thermoplasten der Folie verbunden ist. Diese beschichtete Folie 6 kann für einen Aufbau eines Beckens 7, wie in Figur 1 beschrieben, verwendet werden, ausser dass der aus Fasern F aufgebaute Körper 4, auf der Rückseite der Folie 6, mit einem Biozid 5 behandelt wird. Hierdurch wird der Aufbau eines Beckens beschleunigt, da der separate Schritt des Auflegens des aus Fasern aufgebauten Körpers wegfällt. Zudem wird durch den Verbund zwischen Folie 6 und Körper 4 eine Verbesserung der Beckenqualität erreicht, da insbesondere keine von der Folie verdeckten Falten des Körpers 4 entstehen können. Auch mit diesem Verfahren wird ein mikrobieller Befall der Folie 6 wesentlich herabgesetzt oder vermieden, und keine Verfärbung der Folie 6 tritt auf der Seite eines flüssigen Mediums 8, welches insbesondere Wassers darstellt, ein. Die Folie 6 ist bevorzugt mit einem Biozid für Folien 9 ausgerüstet.

Bevorzugt handelt es sich bei dem aus Fasern (F) aufgebauten Körper 4 mit Hohlräumen (H) um ein Vlies.

### Beispiele

Ein ISO 846 Test wurde an einem Polyestervlies durchgeführt, welches die Einwirkung von Mikroorganismen auf Kunststoffe prüft. Dabei wurde sowohl die Methode A als auch die Methode B des Tests verwendet.

### Methode A: Pilzwachstums-Test (ISO 846)

Die Proben werden auf einem **unvollständigen Nährmedium (ohne Kohlenstoffquelle)** aufgelegt und mit einer Sporensuspension verschiedener Pilze beimpft. Die Pilze sind nur mit Hilfe des Probenmaterials (als Kohlenstoffquelle) in der Lage, zu wachsen. Enthalten die Proben keine verwertbaren Nährstoffe, können die Pilze kein Mycel entwickeln, und es kommt nicht zur Zerstörung des Kunststoffes. Methode A ist geeignet für die Bewertung der Resistenz der Probe gegenüber Pilzbefall, wenn keine weiteren verwertbaren organischen Materialien zugegen sind.

### Methode B: Bestimmung der fungistatischen Wirkung (ISO 846)

Die Proben wurden auf einem **vollständigen Nährmedium (mit Kohlenstoffquelle)** aufgelegt und mit einer Sporensuspension verschiedener Pilze beimpft. Auch wenn der Kunststoff keine verwertbaren Nährstoffe enthält, können die Pilze die Probe überwachsen und ihre Stoffwechselprodukte können das Material angreifen. Jegliche Hemmung des Pilzwachstums sowohl auf dem Kunststoff sowie auch auf dem Nährmedium (Hemmzone) zeigt eine fungistatische (pilzhemmende) Aktivität des Kunststoffes oder das Vorhandensein einer anti-fungistatischen Ausrüstung an. Methode B soll die Situation einer Oberflächenverunreinigung der Probe in der Praxis (Schmutz, organische Ablagerungen etc.) widerspiegeln.

Bewertunasschlüssel von ISO 846 für die Methoden A und B
- 0: kein Wachstum bei mikroskopischer Betrachtung erkennbar.
- 1: leichtes Wachstum, kein Wachstum mit blossem Auge erkennbar, mikroskopisch gut zu erkennen.

- 2: leichtes Wachstum, makroskopisch gut zu sehen, maximal 25 % der Probenoberfläche bewachsen.
- 3: mittelmässiges Wachstum, bis zu 50 % der Probenoberfläche bewachsen.
- 4: starkes Wachstum, über 50 % der Probenoberfläche, jedoch nicht die gesamte Fläche bewachsen.
- 5: starkes Wachstum auf der gesamten Probenoberfläche.

### Versuchsbeschreibung

Drei Proben des Polyestervlieses wurden im ISO 846 Test geprüft:
- ***Probe 1*****:**: Ein Polyestervlies, das nicht mit einem Biozid behandelt wird;
- ***Probe 2*****:**: Ein Polyestervlies, das mit einer 15 %-igen wässrigen Lösung des ACTICIDE® LV 706 getränkt und ca. 24 Stunden getrocknet wird;
- ***Probe 3*****:**: Ein Polyestervlies, das mit einer 15 %-igen wässrigen Lösung des ACTICIDE® LV 706 getränkt, ca. 24 Stunden getrocknet und 1 Woche bei einer Temperatur von 40°C unter Wasser gelagert wird.

Die Proben des Polyestervlieses wurden danach in die beiden Agarlösungen gemäss der Methode A und Methode B gelegt. Nach Lagerung von 28 Tagen bei einer Temperatur von 24 °C (+/-1 °C) wurde das Erscheinungsbild des Polyestervlieses bewertet.

**Tabelle 1**

| Pilzwachstumstestresultate (* = zeigt Hemmzonen) | | | | | | |
|---|---|---|---|---|---|---|
| | Pilzwachstum nach 28 d | | | | | |
| | Methode A | | | Methode B | | |
| ***Probe 1*** | 1 | 1 | 1 | 5 | 5 | 5 |
| ***Probe 2*** | 0 | 0 | 0 | 0* | 0* | 0* |
| ***Probe 3*** | 0 | 0 | 0 | 0 | 0 | 0 |

Tabelle 1 zeigt, dass ***Probe 1*** des Polyestervlieses in der Methode A eine fungistatische Wirkung nach 28 Tagen aufweist. Bei der Methode B hingegen wurde ein starkes Wachstum nach 28 Tagen festgestellt.

Bei ***Probe*** **2** des Polyestervlies konnte sowohl bei der Methode A als auch bei der Methode B kein Pilzwachstum nach 28 Tagen nachgewiesen werden. Bei der Methode B wurden Hemmzonen festgestellt.

Bei ***Probe 3*** des Polyestervlieses konnte sowohl bei der Methode A als auch bei der Methode B kein Pilzwachstum nach 28 Tagen nachgewiesen werden.

### Bezugszeichenliste

- 1: Untergrund
- 2: zementöse Schalung
- 3: Chlorbleichlauge
- 4: aus Fasern (F) aufgebauter Körper mit Hohlräumen (H)
- 5: Biozid
- 6: Folie
- 7: Becken
- 8: flüssiges Medium
- 9: Biozid für Folien
- F: Faser
- H: Hohlraum

## Patentansprüche

1. Aus Fasern (F) aufgebauter Körper (4) mit Hohlräumen (H), **dadurch gekennzeichnet, dass** die Fasern (F) von einem Biozid (5) zumindest teilweise umhüllt sind.

2. Aus Fasern (F) aufgebauter Körper (4) mit Hohlräumen (H) nach Anspruch 1, **dadurch gekennzeichnet, dass** der aus Fasern (F) aufgebaute Körper (4) mit Hohlräumen (H) ein Vlies ist.

3. Aus Fasern (F) aufgebauter Körper (4) mit Hohlräumen (H) nach Anspruch 1 oder 2, **dadurch gekennzeichnet, dass** das Biozid (5) ein Mikrobiozid ist.

4. Aus Fasern (F) aufgebauter Körper (4) mit Hohlräumen (H) nach einem der Ansprüche 1 bis 3, **dadurch gekennzeichnet, dass** das Biozid (5) ein Gemisch eines Benzalkoniumchlorids und 2-n-Octyl-2,3-dihydroisothiazol-3-on ist oder enthält.

5. Aus Fasern (F) aufgebauter Körper (4) mit Hohlräumen (H) nach einem der Ansprüche 1 bis 4, **dadurch gekennzeichnet, dass** das Biozid (5) in Form einer wässrigen Lösung oder Dispersion vorliegt.

6. Aus Fasern (F) aufgebauter Körper (4) mit Hohlräumen (H) nach einem der Ansprüche 1 bis 5, **dadurch gekennzeichnet, dass** die Fasern (F) aus einem Polymer, insbesondere einem Polyester oder einem Homo- oder Copolymeren von Ethylen und/oder Propylen, gefertigt sind.

7. Becken (7), **dadurch gekennzeichnet, dass** es einen aus Fasern (F) aufgebauten Körper (4) mit Hohlräumen (H) gemäss einem der Ansprüche 1 bis 6 umfasst.

8. Ein Becken (7) nach Anspruch 7, **dadurch gekennzeichnet, dass** eine Folie (6), insbesondere eine Weich-PVC-Folie(6), auf dem aus Fasern (F) aufgebauten Körper (4) mit Hohlräumen (H) liegt.

9. Verfahren zur Herstellung eines Beckens (7) nach Anspruch 7 oder 8, **dadurch gekennzeichnet, dass** es folgende Schritte umfasst:
a) Vorbereitung eines Untergrundes (1),
b) Überdeckung des Untergrundes (1) mit einer zementösen Schalung (2),
c) Auflegen eines aus Fasern (F) aufgebauten Körpers (4) mit Hohlräumen (H) auf die zementöse Schalung (2),
d) Behandlung des aus Fasern (F) aufgebauten Körpers (4) mit Hohlräumen (H) mit einem Biozid (5) und
e) Auflegen einer Folie (6) auf den aus Fasern (F) aufgebauten Körper (4) mit Hohlräumen (H).

10. Verfahren zur Herstellung eines Beckens (7) nach Anspruch 7 oder 8, **dadurch gekennzeichnet, dass** es folgende Schritte umfasst:
a) Vorbereitung eines Untergrundes (1),
b) Überdeckung des Untergrundes (1) mit einer zementösen Schalung (2),
c) Behandlung eines aus Fasern (F) aufgebauten Körpers (4) mit Hohlräumen (H) mit einem Biozid (5),
d) Auflegen des mit Biozid (5) behandelten aus Fasern (F) aufgebauten Körpers (4) mit Hohlräumen (H) auf die zementöse Schalung (2), und
e) Auflegen einer Folie (6) auf den aus Fasern (F) aufgebauten Körper (4) mit Hohlräumen (H).

11. Verfahren zur Herstellung eines Beckens (7) nach Anspruch 7 oder 8, **dadurch gekennzeichnet, dass** es folgende Schritte umfasst:
a) Vorbereitung eines Untergrundes (1),
b) Überdeckung des Untergrundes (1) mit einer zementösen Schalung (2),
c) Behandlung eines aus Fasern (F) aufgebauten Körpers (4) mit Hohlräumen (H) mit einem Biozid (5), wobei der aus Fasern (F) aufgebauter Körper 4 mit einer Folie (6) beschichtet ist, und
d) Auflegen des mit Biozid (5) behandelten, aus Fasern (F) aufgebauten Körpers (4), auf die zementöse Schalung (2).

12. Verfahren nach einem der Ansprüchen 9 bis 11, **dadurch gekennzeichnet, dass** die zementöse Schalung (2) mit einem Biozid (5), insbesondere mit dem gleichen Biozid (5), wie für die Behandlung des aus Fasern (F) aufgebauten Körpers (4) mit Hohlräumen (H), behandelt wird.

13. Verfahren nach einem der Ansprüche 9 bis 12, **dadurch gekennzeichnet, dass** die Folie (6) ein Biozid für Folien (9) enthält, insbesondere ausgewählt aus der Gruppe umfassend Organo-Zinn-Verbindungen, Pyrithione, Oxybisphenoxarsen (OBPA), Octylisothiazolinon (OIT) und Dichloroctylisothiazolinon (DCOIT).
